# EUROPEAN PATENT SPECIFICATION

(11) **EP 4 314 978 B1**
(45) Date of publication and mention of the grant of the patent: **04.03.2026**
(21) Application number: 22776223.4
(22) Date of filing: 18.03.2022
(51) Int. Cl.: G05D 21/02, G05D 11/08, B01F 35/82, C10M 177/00, B08B 3/14, G02B 27/00

(54) **METHOD AND SYSTEM COMPRISING A SENSOR DEVICE FOR TREATING INDUSTRIAL PROCESS FLUIDS**
VERFAHREN UND SYSTEM MIT EINER SENSORVORRICHTUNG ZUR BEHANDLUNG VON INDUSTRIELLEN PROZESSFLÜSSIGKEITEN
PROCÉDÉ ET SYSTÈME COMPRENANT UN DISPOSITIF CAPTEUR POUR LE TRAITEMENT DE FLUIDES DE TRAITEMENT INDUSTRIELS

(30) Priority: 23.03.2021 SE 2150334
(43) Date of publication of application: 07.02.2024
(73) Proprietor: Wallenius Water Innovation AB, 112 64 Stockholm (SE)
(72) Inventor: BERGQVIST, Johan, 132 47 Saltsjö-Boo (SE); DIESEN, Veronica, 129 40 Hägersten (SE); LIAO, Haidong, 187 44 Täby (SE); DE ROOS, Mike, 112 30 Stockholm (SE); FERNSTRÖM, Henrik, 134 62 Ingarö (SE)
(74) Representative: Brann AB
(86) International application number: PCT/SE2022/050261
(87) International publication number: WO 2022/203568

(56) References cited:
- CN-C- 100 374 189
- US-A- 2 893 412
- US-A- 3 593 737
- US-A- 3 710 811
- US-B1- 6 396 280

## Description

### TECHNICAL FIELD OF THE INVENTION

The present invention relates to a method for treating industrial process fluids, a fluid treatment system for treating industrial process fluids and a system using an industrial process fluid and comprising a fluid treatment system.

### BACKGROUND

Industrial process fluids, such as for example metal working fluids and washing fluids which are used in industrial processes, where metal working fluids can comprise for example cutting fluids, washing fluids and quenching fluids, need to be treated regularly when used in a system. For example, an industrial process fluid concentrate may need to be added to compensate for pull-out (consumption) and water may need to be added to compensate for evaporation that may occur during use of the industrial process fluid in the system. Further treatment of the industrial process fluid may also be needed from time to time such as a purification treatment.

For measuring a concentration of an industrial process fluid concentrate in an industrial process fluid some kind of sensor is needed. For example, a refractometer may be used which optically measures the fluids refractive index. There are problems related to using sensors in industrial process fluids. Any sensor that is continuously in contact with the industrial process fluid will usually get contaminated due to the fact that industrial process fluids may be heavily contaminated, which often is the case in for example both metal working fluids and washing fluids. The contamination may cause the sensor to show an incorrect value. The sensors may need to be cleaned and calibrated from time to time to work correctly. A system for blending fluids is known from the Chinese patent application CN 100 374 189 C. Moreover, the United States Patent US 6,396,280 B1 shows a method and apparatus for measuring the concentration of blended fluid.

### SUMMARY

An object of the invention is to provide an improved method and system for treating industrial process fluids.

A further object of the invention is to provide an improved method and system for controlling a concentration of an industrial process fluid concentrate in an industrial process fluid.

This is achieved in a method, a fluid treatment system and a system using industrial process fluid according to the independent claims.

According to one aspect of the invention a method for treating an industrial process fluid used in a system is provided. Said method comprises the steps of:
- transferring a part of the industrial process fluid used in the system through a first fluid path arrangement of a fluid treatment system which is connected to an outlet and an inlet of the system;
- measuring a concentration of an industrial process fluid concentrate in the industrial process fluid by a sensor device provided in the first fluid path arrangement of the fluid treatment system;
- adding an amount of this industrial process fluid concentrate to the industrial process fluid used in the system in order to maintain a predefined concentration level, wherein said amount is calculated based on the measured concentration, whereby the industrial process fluid concentrate is provided into the system via the sensor device in the fluid treatment system;
- cleaning the sensor device at certain time intervals by providing the industrial process fluid concentrate into the sensor device and keeping the industrial process fluid concentrate in the sensor device for a certain time period.

According to another aspect of the invention a fluid treatment system for treating an industrial process fluid used in a system to which the fluid treatment system can be connected is provided. Said fluid treatment system comprises:
- a first fluid connector configured to be connected to an outlet provided in the system, said first fluid connector being configured for receiving industrial process fluid into the fluid treatment system;
- a second fluid connector configured to be connected to an inlet provided in the system for returning industrial process fluid after treatment in the fluid treatment system;
- a first fluid path arrangement which is fluidly connecting the first fluid connector and the second fluid connector, wherein said first fluid path arrangement comprises:
   o a first pump configured to pump industrial process fluid from the first fluid connector to the second fluid connector; and
   o a sensor device which is connected in the first fluid path arrangement such that it receives at least a part of the industrial process fluid pumped by the first pump, wherein said sensor device is configured for measuring a concentration of an industrial process fluid concentrate in the industrial process fluid; and
- a second fluid path arrangement which is provided in connection with an inlet of the sensor device, wherein said second fluid path arrangement comprises:
   o a third fluid connector configured to be connected to an industrial process fluid concentrate tank,

whereby an industrial process fluid concentrate can be provided by the fluid treatment system from a connected industrial process fluid concentrate tank via the second fluid path arrangement and via the sensor device in the first fluid path arrangement and further via the first fluid path arrangement to the second fluid connector for addition to the industrial process fluid used in a connected system
wherein said fluid treatment system further comprises a control system, whereby the control system is configured to control the fluid treatment system to add an amount of industrial process fluid concentrate via the second fluid path arrangement and via the sensor device to the connected system in order to maintain a predefined concentration level, wherein said amount is calculated based on the concentration measured in the sensor device,
wherein the control system is configured to control the fluid treatment system for cleaning the sensor device at certain time intervals by letting industrial process fluid concentrate pass into the sensor device and keeping the industrial process fluid concentrate in the sensor device for a certain time period.

According to another aspect of the invention a system using industrial process fluid is provided, wherein said system comprises a fluid treatment system as defined above, wherein said fluid treatment system is connected to an outlet and an inlet provided in the system.

Hereby, by providing the sensor device in a fluid path external to the system where the industrial process fluid is used, the sensor device need not be immersed in industrial process fluid all the time and can hereby be kept clean and less affected by the industrial process fluid and hereby give correct measuring results for a longer time compared to if the sensor device was positioned in industrial process fluid all the time. Furthermore, according to the invention a step of adding new industrial process fluid concentrate in dependence of the measured concentration is provided and this addition of concentrate is according to the invention provided via the sensor device. Hereby the sensor device will be immersed in clean industrial process fluid concentrate regularly which will serve as a cleaning of the sensor. Hereby, there is no need for a stop in the process for the cleaning of the sensor. Hereby an effective and reliable method and system is achieved for treating industrial process fluid where a sensor device can be used reliably for a long time and provide correct sensor output.

One or more valves provided in the system needs to be controlled by a control system for transferring industrial process fluid concentrate into the sensor device and for keeping the industrial process fluid concentrate in the sensor device for a certain time period for performing the cleaning. By keeping the sensor device immersed in industrial process fluid concentrate for a certain time period the sensor device will be effectively cleaned.

In some embodiments of the invention said sensor device comprises a refractometer. Also other sensors can be provided in the sensor device such as a pH sensor and/or a conductivity sensor.

In some embodiments of the invention the step of transferring a part of an industrial process fluid provided in the system through a first fluid path arrangement of a fluid treatment system comprises dividing a flow of the industrial process fluid when passing through the first fluid path arrangement of the fluid treatment system into at least a main fluid path and a return loop fluid path, wherein said main fluid path comprises a first pump and said return loop fluid path either comprises the sensor device or is connected to a possible separate sensor device fluid path of the first fluid path arrangement, wherein said sensor device fluid path comprises the sensor device, wherein said return loop fluid path is connected to the main fluid path such that a part of the fluid flow in the main fluid path can be returned over the first pump via the return loop fluid path and wherein a fluid flow through said return loop fluid path is driven by a differential pressure over the first pump. Hereby a large mixing flow can be provided through the main fluid path all the time or often and a fluid flow through the sensor device is only needed occasionally, for measuring a concentration of the industrial process fluid concentrate in the industrial process fluid and for addition of industrial process fluid concentrate and possibly for addition of water. Hereby the sensor device and other sensitive components such as the valves will not be exposed to the harsh industrial process fluid more than necessary and this will prolong their lifetime and reliability. Furthermore, a good mixing of industrial process fluid can still be performed in the fluid treatment system at all time via the main fluid path and the first pump.

In some embodiments of the invention the step of measuring a concentration of an industrial process fluid concentrate in the industrial process fluid and the step of adding an amount of this industrial process fluid concentrate to the industrial process fluid used in the system comprises sucking industrial process fluid and industrial process fluid concentrate respectively through the sensor device by an ejector pump which is driven by the first pump in the main fluid path and connected to an outlet of the sensor device. By using an ejector pump no further pump is needed in the system, i.e. no separate pump is needed for pumping the industrial process fluid concentrate from the industrial process fluid concentrate tank. This is suitable because the industrial process fluid concentrate may have high viscosity and a chemically aggressive nature that may damage other types of pumps. An ejector pump on the other hand is not that sensitive. Also an ejector pump can handle unlimited dry running without taking damage. This may occur when the industrial process fluid concentrate tank is empty. The ejector pump does not require a separate power supply since it is driven by the first pump which is suitable. This is suitable for the cleaning process of the sensor device and is described in more detail in the detailed description.

In some embodiments of the invention the method further comprises the step of adding water to the industrial process fluid in the system, whereby the adding of water is provided via the sensor device. Hereby the sensor device can be stored in water between uses which is suitable for preserving of sensor functions and prolong a lifetime of the sensor device. Furthermore, the sensor device can be calibrated by use of the water at certain time intervals by use of the water passing the sensor device on its way into the system.

In some embodiments of the invention the method comprises mixing the industrial process fluid used in the system by pumping the industrial process fluid via the fluid treatment system. Furthermore, the added industrial process fluid concentrate can be effectively mixed into the industrial process fluid in the main fluid path and in the first pump. This is important for effective use of the industrial process fluid in the system.

In some embodiments of the invention the method further comprises the step of irradiating the industrial process fluid by UV light in a UV reactor provided in the fluid treatment system, whereby the method further comprises the step of pumping the industrial process fluid through the reactor by the first pump. Hereby the industrial process fluid can also be treated by UV and bacteria can be destroyed. Bacteria in an industrial process fluid can be problematic in many applications. In the embodiments of the invention where a UV reactor is provided the pump used for pumping the industrial process fluid through the UV reactor is also used for mixing of the industrial process fluid concentrate into the industrial process fluid. Hereby a combined effect is provided where both mixing, addition of industrial process fluid concentrate and UV treatment is performed effectively.

In some embodiments of the invention said industrial process fluid is a metal working fluid. The industrial process fluid may also be for example a washing fluid.

Further embodiments of the invention are described in the detailed description and in the dependent claims.

### BRIEF DESCRIPTION OF THE DRAWINGS

Figures 1a and 1b show schematically two different variations of a fluid treatment system according to one embodiment of the invention. Figure 1b has an added feature of a water supply connection.
Figures 2a and 2b show schematically two different variations of a fluid treatment system according to one embodiment of the invention. Figure 2b has an added feature of a water supply connection.
Figures 3a and 3b show schematically two different variations of a fluid treatment system according to one embodiment of the invention. Figure 3b has an added feature of a water supply connection.
Figures 4a and 4b show schematically two different variations of a fluid treatment system according to one embodiment of the invention. Figure 4b has an added feature of a water supply connection.
Figures 5a and 5b show schematically two different variations of a fluid treatment system comprising a UV reactor according to one embodiment of the invention. Figure 5b has an added feature of a water supply connection.
Figure 6 shows schematically a fluid treatment system comprising a UV reactor according to one embodiment of the invention.
Figure 7 shows schematically a fluid treatment system comprising a UV reactor according to one embodiment of the invention.
Figures 8a and 8b show schematically two different variations of a fluid treatment system comprising a UV reactor according to one embodiment of the invention. Figure 8b has an added feature of a water supply connection.
Figure 9 is a flow chart of a method according to one embodiment of the invention.

### DETAILED DESCRIPTION OF EMBODIMENTS

The present invention relates to the treatment of industrial process fluids. Industrial process fluids can be for example metal working fluids or washing fluids which are used in industrial processes. Washing fluids may be used in different stages of many different industrial processes such as for example washing of materials or components or washing of manufacturing equipment. Metal working fluids can comprise for example cutting fluids, washing fluids and quenching fluids which are used in metal working industry. The present invention may be especially effective for treating industrial process fluids comprising an oil emulsion. Measuring concentrations in oil emulsions can be problematic due to the way refractometers interact with the droplet sizes in emulsions. Measuring emulsions correctly requires the sensor to be very clean. Hereby the present invention can be especially suitable for these types of industrial process fluids which will be discussed in more detail below. Said industrial process fluids are used in different types of systems. Often said systems comprise an industrial process fluid tank where the industrial process fluid is collected. The industrial process fluid needs to be treated at regular time intervals. For example, an industrial process fluid concentrate may need to be added if a concentration of the industrial process fluid concentrate in the industrial process fluid has decreased during use of the industrial process fluid in the system. Furthermore, water may need to be added because of vaporisation of water from the industrial process fluid during use in the system and still further it may be necessary to purify the industrial process fluid from bacteria, particles or other contaminants.

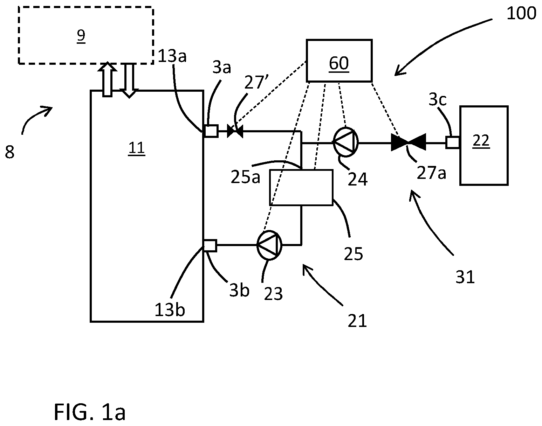

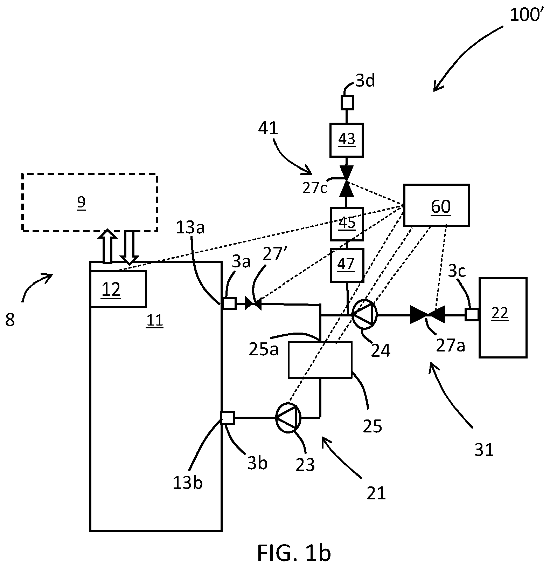

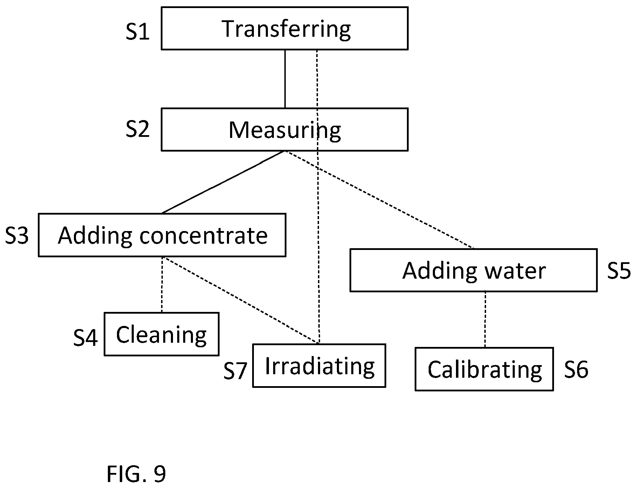

According to the present invention a method for treating industrial process fluids and a fluid treatment system for treating industrial process fluids used in a system are provided. The method and the fluid treatment system are described together with reference to the different embodiments of the fluid treatment system which are shown in Figures 1-8. Figure 9 shows a flow chart of a method according to one embodiment of the invention. Some of the details in the different embodiments of fluid treatment systems in Figures 1-8 are the same or similar and are therefore given the same or similar reference numbers. First a more general description of the invention is given with reference to all the drawings and then each embodiment will be described in more detail with reference to respective drawing.

According to the invention a fluid treatment system 100; 100'; 200; 200'; 300; 300'; 400; 400'; 500; 500'; 600; 700; 800; 800' for treating an industrial process fluid used in a system 8 to which the fluid treatment system can be connected is provided. The system can for example be any type of machine or other industrial equipment that uses industrial process fluid. The system 8 comprises often an industrial process fluid tank 11 which is a tank where the industrial process fluid is collected when it is not in use in the system. The fluid treatment system 100; 100'; 200; 200'; 300; 300'; 400; 400'; 500; 500'; 600; 700; 800; 800' according to the invention is configured to be connected to such a system 8 which is using industrial process fluid. If an industrial process fluid tank 11 is provided in the system 8 the fluid treatment system can be connected to the industrial process fluid tank 11 but it can also be connected at other positions in the system. The fluid treatment system comprises hereby a first fluid connector 3a configured to be connected to an outlet 13a provided in the system 8. The outlet 13a can for example be provided in an industrial process fluid tank 11 of the system 8. The first fluid connector 3a is configured for receiving industrial process fluid into the fluid treatment system. The fluid treatment system comprises further a second fluid connector 3b configured to be connected to an inlet 13b provided in the system 8 for returning industrial process fluid after treatment in the fluid treatment system. The inlet 13b can for example be provided in an industrial process fluid tank 11 of the system 8. The fluid treatment system comprises furthermore a first fluid path arrangement 21 which is fluidly connecting the first fluid connector 3a and the second fluid connector 3b. The first fluid path arrangement 21 comprises a first pump 23 configured to pump industrial process fluid from the first fluid connector 3a to the second fluid connector 3b and a sensor device 25 which is connected in the first fluid path arrangement 21 such that it receives at least a part of the industrial process fluid pumped by the first pump 23, wherein said sensor device 25 is configured for measuring a concentration of an industrial process fluid concentrate in the industrial process fluid. The industrial process fluid concentrate can for example be a metal working fluid concentrate in the example of metal working fluid as industrial process fluid or a washing fluid concentrate in the example of a washing fluid as the industrial process fluid. The sensor device comprises for example a refractometer which is a sensor which measures a refractive index of a fluid and can for example be used for measuring a concentration of a content in a fluid. The sensor device 25 can also in some embodiments of the invention comprise other types of sensors, such as a pH sensor and/or a conductivity sensor.

The fluid treatment system comprises furthermore a second fluid path arrangement 31 which is provided in connection with an inlet 25a of the sensor device 25. The second fluid path arrangement 31 comprises a third fluid connector 3c configured to be connected to an industrial process fluid concentrate tank 22. The second fluid path arrangement 31 comprises also in some embodiments a valve, here called a concentrate valve 27a.

With this fluid treatment system 100; 100'; 200; 200'; 300; 300'; 400; 400'; 500; 500'; 600; 700; 800; 800' an industrial process fluid concentrate can be provided by the fluid treatment system from a connected industrial process fluid concentrate tank 22, first via the second fluid path arrangement 31 and then via the sensor device 25 in the first fluid path arrangement 21 and further via the first fluid path arrangement 21 to the second fluid connector 3b for further being transferred into a connected system 8. By providing industrial process fluid concentrate to the system 8 via the sensor device 25 the sensor device will be regularly immersed in clean industrial process fluid concentrate which is suitable because it serves as a cleaning of the sensor device 25. Furthermore, by positioning the sensor device 25 in an external fluid path outside the system 8 the sensor device 25 will not be immersed in the industrial process fluid all the time which will prolong a lifetime for the sensor device because the industrial process fluid is often very contaminated and harsh for the sensor device. Contaminants can attach to the sensor device, for example a refractometer, and disturb refractive reading. Hereby measurement reliability and a sensor lifetime can be improved by this invention. Even further the sensor device 25 itself can be used as an indicator for the presence of an industrial process fluid concentrate in the industrial process fluid concentrate tank 22. A reading from the sensor device 25 can indicate if the flow of industrial process fluid concentrate has stopped due to the industrial process fluid concentrate tank 22 being empty. And even further the added industrial process fluid concentrate can be effectively mixed into the industrial process fluid in the first fluid path arrangement 21 of the fluid treatment system. The industrial process fluid concentrate and the circulated industrial process fluid from the system 8 will be effectively mixed in the first pump 23 and possibly no other mixing device needs to be provided to for example an industrial process fluid tank 11 of the system 8 for mixing of the industrial process fluid.

With reference to all the drawings and specifically to Figure 9, a method according to the invention for treating an industrial process fluid which is used in a system 8 is described. The method comprises the steps of:
S1: Transferring a part of an industrial process fluid used in the system 8 through a first fluid path arrangement 21 of a fluid treatment system 100; 100'; 200; 200'; 300; 300'; 400; 400'; 500; 500'; 600; 700; 800; 800' connected to an outlet 13a and an inlet 13b of the system 8.

The industrial process fluid will be circulated through the first fluid path arrangement 21 of the fluid treatment system and received into the fluid treatment system from the outlet 13a of the system 8 (possibly provided in an industrial process fluid tank 11 of the system 8) and returned to the system 8 (possibly an industrial process fluid tank 11 of the system 8) via the inlet 13b.

S2: Measuring a concentration of an industrial process fluid concentrate in the industrial process fluid by a sensor device 25 provided in the first fluid path arrangement 21 of the fluid treatment system 100; 100'; 200; 200'; 300; 300'; 400; 400'; 500; 500'; 600; 700; 800; 800'.

S3: Adding an amount of this industrial process fluid concentrate to the industrial process fluid used in the system 8 in order to maintain a predefined concentration level, wherein said amount is calculated partly based on the measured concentration, whereby the industrial process fluid concentrate is provided into the system 8 via the sensor device 25 in the fluid treatment system.

The amount of industrial process fluid concentrate to add is calculated based on also other factors such as a total volume of industrial process fluid in the system 8. An amount of added industrial process fluid concentrate can in some embodiments of the invention be controlled by use of a flow sensor measuring the flow of an industrial process fluid concentrate into the fluid treatment system and in other embodiments of the invention a time period for opening a valve and allowing an industrial process fluid concentrate from an industrial process fluid concentrate tank 22 to pass into the fluid treatment system can be calculated based on a pump effect and a viscosity of the industrial process fluid concentrate.

In some embodiments of the invention the method further comprises a step of:
S4: Cleaning the sensor device 25 at certain time intervals by providing the industrial process fluid concentrate into the sensor device 25 and keeping the industrial process fluid concentrate in the sensor device for a certain time period. The industrial process fluid concentrate will have a cleaning effect on the sensor device which can be utilised in this method and system according to the invention where the industrial process fluid concentrate is added via the sensor device and then into the system 8.

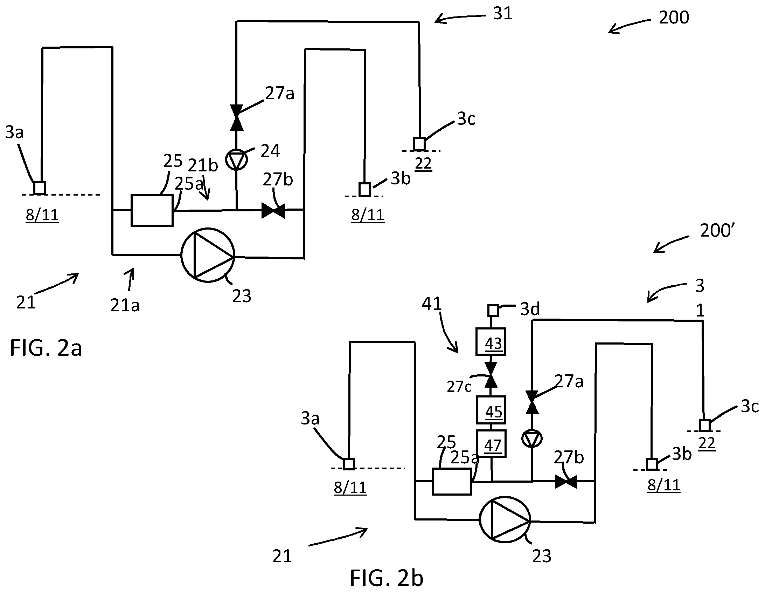

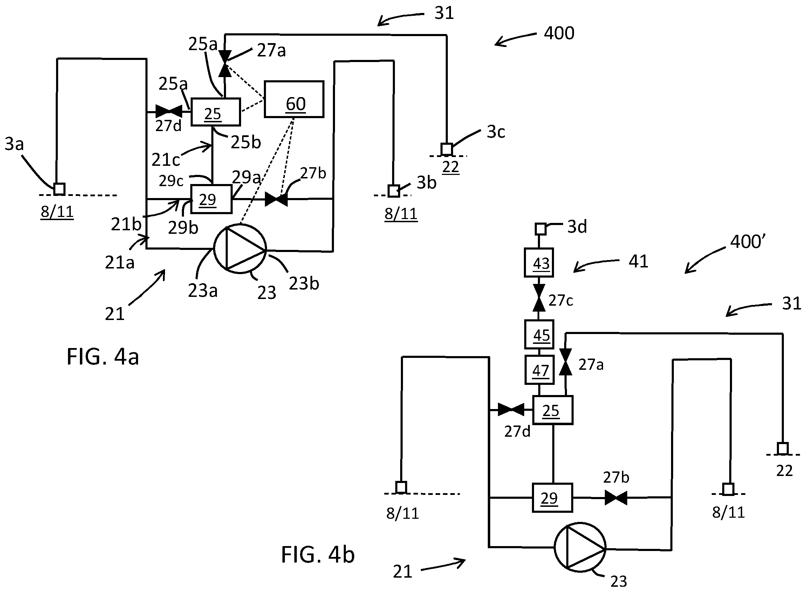

In some embodiments of the invention, which will be described in further detail below with reference to Figure 2-8, the step of transferring, S1, a part of an industrial process fluid provided in the system 8 through a first fluid path arrangement 21 of a fluid treatment system further comprises dividing a flow of the industrial process fluid when passing through the first fluid path arrangement 21 of the fluid treatment system 200; 200'; 300; 300'; 400; 400'; 500; 500'; 600; 700; 800; 800' into at least a main fluid path 21a and a return loop fluid path 21b. The main fluid path 21a comprises the first pump 23. The return loop fluid path 21b either comprises the sensor device 25 or is connected to a possible separate sensor device fluid path 21c of the first fluid path arrangement 21, wherein said sensor device fluid path 21c comprises the sensor device 25. In the embodiments shown in Figures 2, 3, 6 and 7 the sensor device 25 is provided in the return loop fluid path 21b and in the embodiments shown in Figures 4, 5 and 8 the sensor device 25 is provided in a separate sensor device fluid path 21c. The return loop fluid path 21b is connected to the main fluid path 21a such that a part of the fluid flow in the main fluid path 21a can be returned over the first pump 23 via the return loop fluid path 21b and wherein a fluid flow through said return loop fluid path 21b is driven by a differential pressure over the first pump 23. Hereby there is no need for an extra pump for dividing a part of the flow into the return loop fluid path 21b and furthermore it will be possible to use the first pump 23 as a mixing pump and use the main fluid path 21a as a mixing flow for mixing of the industrial process fluid. I.e., a comparatively large flow of industrial process fluid can be provided through the main fluid path 21a. This flow can be provided often or all the time. Only a small part of the fluid flow is transferred through the sensor device in the return loop fluid path 21b or possibly the sensor device fluid path 21c which will be described in further detail below. The fluid flow through the return loop fluid path 21b can be provided only occasionally, i.e. only when measurement of the concentration of the industrial process fluid concentrate is needed and when an industrial process fluid concentrate or water is to be added. The rest of the time the sensor device 25 can be stored in industrial process fluid concentrate or water as will be further described below. Hereby contamination of the sensor device from the industrial process fluid can be kept as small as possible and hereby the sensor device can provide accurate measuring for a longer time as discussed above. Furthermore, a larger flow provided through the main fluid path 21a for mixing is suitable for mixing of the added industrial process fluid concentrate into the flow of industrial process fluid in the main fluid path 21a before it is transferred back to the system 8. If an industrial process fluid tank 11 is provided in the system 8 a mixing of the industrial process fluid in the industrial process fluid tank 11 can be effectively performed by the fluid treatment system according to the invention.

In some embodiments of the invention the method further comprises the step of:
S5: Adding water to the industrial process fluid in the system 8, whereby the adding of water is provided via the sensor device 25. Fluid treatment systems 100', 200', 300', 400', 500', 600, 700, 800' which are adapted for water addition are shown in Figures 1b, 2b, 3b, 4b, 5b, 6, 7 and 8b. The fluid treatment system comprises in these embodiments a third fluid path arrangement 41 which is provided in connection with an inlet 25a of the sensor device 25, wherein said third fluid path arrangement 41 comprises a fourth fluid connector 3d configured to be connected to a water supply, whereby adding of water can be provided via the sensor device 25. The addition of water may be necessary if water is vaporised during use of the industrial process fluid in the system. A level sensor 12 can be provided in an industrial process fluid tank 11 of the system 8 if an industrial process fluid tank 11 is provided. The level sensor 12 can indicate if the amount of industrial process fluid in the system has decreased and water needs to be added. By providing water via the sensor device 25 the sensor device can be easily calibrated at regularly intervals by use of the water. Hereby the method according to some embodiments of the invention further comprises the step of:
S6: Calibrating the sensor device at certain time intervals by use of the water passing the sensor device on its way into the industrial process fluid tank.

In these fluid treatment systems 100', 200', 300', 400', 500', 600, 700, 800' according to the invention where water can be added via the sensor device 25, the sensor device 25 can also be stored in water between the measurements. This is suitable because water will not affect the sensor device negatively and the sensor device will be usable for a longer time. A further advantage with providing water and industrial process fluid concentrate into the system 8 via the sensor device 25 is that the sensor device 25 can be used for registering an outage of industrial process fluid concentrate or water or a stop in the system. The output from the sensor device 25 will clearly indicate if there is water, industrial process fluid or industrial process fluid concentrate in the sensor device 25 and hereby a non-expected output from the sensor device would indicate a stop in the system or that there is no industrial process fluid concentrate left in the industrial process fluid concentrate tank 22. Hereby a user of the system can get an alert when the industrial process fluid concentrate tank 22 is empty and/or when there is a stop in the water supply.

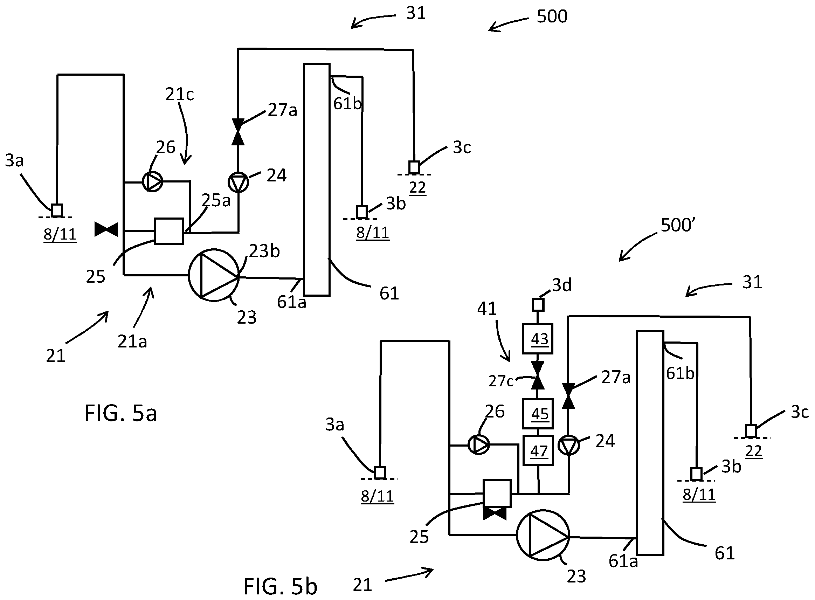

In some embodiments of the invention the method further comprises the step of:
S7: Irradiating the industrial process fluid by UV light in a UV reactor 61 which in some embodiments of the invention is provided in the fluid treatment system 500; 500'; 600; 700; 800 ;800'. Such fluid treatment systems which comprise a UV reactor 61 are shown in Figures 5-8. The industrial process fluid is in these embodiments pumped through the reactor 61 by the first pump 23. The UV irradiation will destroy bacteria in the industrial process fluid effectively.

The different embodiments as shown in Figures 1-8 are now described in order below with some more details. Many of the details are relevant for more than one of the embodiments and will not be described for each of the embodiments.

Figure 1a shows schematically a fluid treatment system 100 according to one embodiment of the invention which is connected to a system 8 which is using an industrial process fluid. In this example the system 8 comprises a working part 9 and an industrial process fluid tank 11 in which the industrial process fluid is collected. The fluid treatment system 100 according to the invention is in this example connected to the industrial process fluid tank 11 but could alternatively be connected at another position in the system 8. This will be the same for all embodiments described below with reference to Figures 1-8 but will not be repeated again. The fluid treatment system 100 according to the invention is also connected to an industrial process fluid concentrate tank 22. The fluid treatment system 100 comprises a first fluid connector 3a configured to be connected to an outlet 13a provided in the system 8. In this example the outlet 13a is provided in the industrial process fluid tank 11 of the system 8. The first fluid connector 3a is configured for receiving industrial process fluid from the system 8 into the fluid treatment system. The fluid treatment system 100 comprises further a second fluid connector 3b configured to be connected to an inlet 13b provided in the system 8 for returning industrial process fluid after treatment in the fluid treatment system. In this embodiment the inlet 13b is provided in the industrial process fluid tank 11 of the system 8. The fluid treatment system 100 comprises further a first fluid path arrangement 21 which is fluidly connecting the first fluid connector 3a and the second fluid connector 3b, wherein said first fluid path arrangement 21 comprises a first pump 23 configured to pump industrial process fluid from the first fluid connector 3a to the second fluid connector 3b. So far, all the details described for the embodiment as shown in Figure 1a are the same for all the embodiments and these details will not be described again below where all the other embodiments are described. However, as described above the fluid treatment system does not necessarily need to be connected to an industrial process fluid tank 11 but can instead be connected to another part of the system 8. This is applicable to all embodiments of the invention.

The first fluid path arrangement 21 comprises furthermore a sensor device 25 which in this embodiment is connected in the first fluid path arrangement 21 such that the industrial process fluid pumped by the first pump 23 will pass the sensor device 25. The sensor device 25 is configured for measuring a concentration of an industrial process fluid concentrate in the industrial process fluid.

The fluid treatment system 100 comprises furthermore a second fluid path arrangement 31 which is provided in connection with an inlet 25a of the sensor device 25, wherein said second fluid path arrangement 31 comprises a third fluid connector 3c configured to be connected to an industrial process fluid concentrate tank 22. The second fluid path arrangement 31 comprises also in some embodiments a valve, here called a concentrate valve 27a. Hereby the fluid treatment system 100 can be connected to an industrial process fluid concentrate tank 22 and industrial process fluid concentrate can be provided via the fluid treatment system 100 to the system 8. This description of the second fluid path arrangement 31 is also common for most embodiments and will not be repeated again for all the embodiments.

In this embodiment of the invention, but not in all embodiments, the second fluid path arrangement 31 further comprises a concentrate pump 24. The first fluid path arrangement 21 comprises furthermore in this embodiment but not in all embodiments, a valve 27'. By controlling the concentrate valve 27a, the valve 27', the first pump 23 and the concentrate pump 24 in the fluid treatment system 100 the addition of industrial process fluid concentrate from the industrial process fluid concentrate tank 22 can be controlled. This addition should be based on a concentration measurement by the sensor device 25 as discussed above. In some embodiments of the invention the fluid treatment system 100 further comprises a control system 60. In Figure 1a a control system 60 is shown connected to the sensor device 25, the first pump 23, the concentrate pump 24, the concentrate valve 27a and the valve 27'. Control systems can be provided in all the other embodiments but is only shown in the embodiments of Figure 1a, 1b and 4a. Controllable components, such as for example the sensor device 25, the pumps and the valves of the fluid treatment system can be connected to such a control system 60, whereby the control system is configured to control the fluid treatment system to add an amount of industrial process fluid concentrate via the second fluid path arrangement 21b and via the sensor device 25 to the system 8 in order to maintain a predefined concentration level, wherein said amount is calculated based on the concentration measured in the sensor device 25. The control system 60 can be configured to control the fluid treatment system 100; 100'; 200; 200'; 300; 300'; 400; 400'; 500; 500'; 600 ;600'; 700 ;700' for cleaning the sensor device 25 at certain time intervals by letting industrial process fluid concentrate pass into the sensor device 25 and keeping the industrial process fluid concentrate in the sensor device 25 for a certain time period.

Figure 1b shows schematically a fluid treatment system 100' which is almost identical with the fluid treatment system 100 of Figure 1a. The difference is that in the fluid treatment system 100' of Figure 1b the fluid treatment system 100' further comprises a third fluid path arrangement 41 which is provided in connection with an inlet 25a of the sensor device 25. The third fluid path arrangement 41 comprises a fourth fluid connector 3d configured to be connected to a water supply, whereby an addition of water can be provided via the sensor device 25. The water supply is normally pressurized so no extra pump is hereby needed. The third fluid path arrangement 41 comprises also a water valve 27c. Hereby water addition can be controlled by controlling said water valve 27c. A control system 60 is also in this embodiment shown to be connected to the first pump 23, the concentrate pump 24, the concentrate valve 27a, the valve 27' and the water valve 27c and to the sensor device 25 and hereby both industrial process fluid concentrate addition and water addition can be controlled by the control system 60. A level sensor 12 may also be provided in the industrial process fluid tank 11 and this level sensor 12 may possibly also be connected to the control system 60 such that a water addition can be properly controlled based on a read out from the level sensor.

The third fluid path arrangement 41 comprises suitably, but not necessarily some more components. One or more of the components described in this passage may be provided in a third fluid path arrangement 41 according to the invention. A dirt filter 43 for filtering other possible content than water from the water supply may be provided. A constant flow valve 45 which will assure a certain flow of water into the fluid treatment system 100' may be provided and a non return valve 47 which will ensure that no fluid is flowing out from the fluid treatment system 100' via the third fluid path arrangement 41 may be provided. These parts of the third fluid path arrangement 41 are the same for all the embodiments which include the third fluid path arrangement 41 and will not be described in detail again.

As partly already described above there are many advantages with a fluid treatment system according to the invention. By moving the sensor device 25 outside the system the sensor device will not be fouled and contaminated by the industrial process fluid as fast as if it was positioned all the time in the industrial process fluid inside for example the industrial process fluid tank 11 of the system 8. Furthermore, by adding new industrial process fluid concentrate into the system 8 via the sensor device, the sensor device 25 can be cleaned regularly in an easy way. Even further the sensor device itself can be used as an indicator if the industrial process fluid concentrate tank 22 is empty of industrial process fluid concentrate. In some embodiments of the invention also water can be added via the sensor device 25 which is suitable because then the sensor device 25 can also easily be calibrated by use of the water and the sensor device can be stored in water as described above.

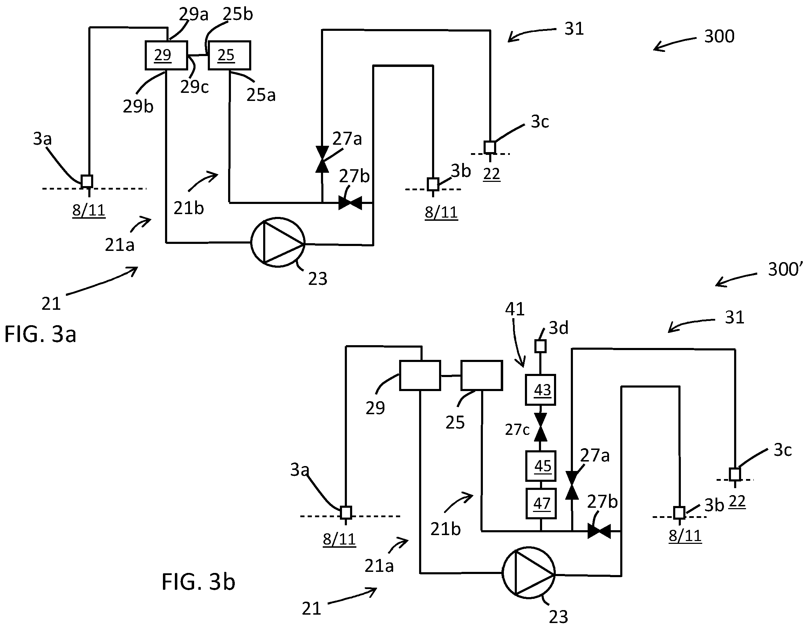

Figure 2a shows schematically another embodiment of a fluid treatment system 200 according to the invention. The system 8 (possibly comprising an industrial process fluid tank 11) and the industrial process fluid concentrate tank 22 are not shown more than by numbers to which the first, second and third fluid connectors 3a, 3b, and 3c can be connected to. This will be the same in the rest of the Figures 3-7. The system 8 and the tanks 11 and 22 are only shown in Figures 1a and 1b. In this embodiment of the invention the first fluid path arrangement 21 comprises a main fluid path 21a and a return loop fluid path 21b. The main fluid path 21a comprises the first pump 23 and the return loop fluid path 21b comprises the sensor device 25. The return loop fluid path 21b is connected to the main fluid path 21a such that a part of the fluid flow in the main fluid path 21a can be returned over the first pump 23 via the return loop fluid path 21b. A fluid flow through said return loop fluid path 21b is driven by a differential pressure over the first pump 23. The return loop fluid path 21b further comprises a return loop valve 27b. Hereby, by use of only the first pump 23, a smaller part of the fluid flow which is transferred through the main fluid path 21a can be redirected to flow through the return loop fluid path 21b and hereby pass the sensor device 25. By closing and opening the return loop valve 27b (suitably controlled by a connected control system 60) a flow of industrial process fluid through the sensor device 25 can be controlled to be performed only occasionally when the concentration of industrial process fluid concentrate needs to be measured. Hereby the sensor device 25 will not be affected by the industrial process fluid as much as if it were exposed to the industrial process fluid more often or all the time as discussed above. Hereby the sensor device will have a long lifetime and perform reliable measurements. The first pump 23 and the main fluid path 21a can hereby be used for larger flows of industrial process fluid and thus be used for mixing of the industrial process fluid in the system 8, possibly mixing in the industrial process fluid tank 11. According to this invention, the industrial process fluid concentrate is also added via the fluid treatment system 200 and hereby a larger flow of industrial process fluid through the main fluid path 21a is also advantageous for the inmixing of industrial process fluid concentrate in the industrial process fluid. The fluid treatment system 200 comprises a second fluid path arrangement 31 which is provided in connection with an inlet 25a of the sensor device 25 in the same way as already described above in relation to the embodiment shown in Figure 1a. The second fluid path arrangement 31 comprises also in this embodiment a concentrate pump 24. A control system is not shown but suitably the pumps, valves and sensor device are connected to a control system also in this embodiment and in all other embodiments such that the pumps and valves can be controlled based on for example predefined settings and a read out from the sensor device.

In the fluid treatment system 200 according to this embodiment a fluid flow can be pumped through the main fluid path 21a by the first pump 23 while both the concentrate valve 27a and the return loop valve 27b are closed. When a concentration of industrial process fluid concentrate should be measured by the sensor device 25 the return loop valve 27b is opened. When the return loop valve 27b is open a part of the fluid flown through the main fluid path 21a will be transferred via the return loop fluid path 21b. The fluid flow through said return loop fluid path 21b is driven by a differential pressure over the first pump 23. If the measured concentration indicates a low level it may be necessary to add industrial process fluid concentrate from the industrial process fluid concentrate tank 22 whereby the concentrate valve 27a is opened and the concentrate pump 24 is turned on. The return loop valve 27b may at the same time be closed but it can also be kept open. Hereby industrial process fluid concentrate is pumped via the second fluid path arrangement 31 from the industrial process fluid concentrate tank 22 to the inlet 25a of the sensor device 25. The industrial process fluid concentrate is transferred through the sensor device 25 and will be mixed with the industrial process fluid flow in the main fluid path 21a of the first fluid path arrangement 21 and in the first pump 23 and be pumped through the first fluid path arrangement 21 and further transferred to the second fluid connection 3b and further into the system 8. The mixing in the first pump 23 with the industrial process fluid in the main fluid path 21a will be very efficient which is suitable. Without a good inmixing of an industrial process fluid concentrate in an industrial process fluid it is a risk that the industrial process fluid concentrate will sink to a bottom and not be properly utilised. A flow through the main fluid path 21a can be relatively large and can also be provided relatively often or all the time or almost all the time independently of the measuring of concentration in the sensor device and the addition of industrial process fluid concentrate. Hereby the fluid treatment device according to the invention can be effectively used for mixing of an industrial process fluid in a system 8, such as mixing of an industrial process fluid in an industrial process fluid tank 11 of a system 8. During cleaning of the sensor device 25 the return loop valve 27b is closed and industrial process fluid concentrate can be kept inside the sensor device 25 and thereby clean the sensor device 25. Hereby the pumps, valves and the sensor device can be controlled to both mix the industrial process fluid in the system 8, measuring the concentration of industrial process fluid concentrate in the industrial process fluid, addition of industrial process fluid concentrate and cleaning of the sensor device.

In figure 2b the same embodiment as described in relation to Figure 2a is shown with the only addition that the fluid treatment system 200' further comprises a third fluid path arrangement 41 which is provided in connection with an inlet 25a of the sensor device 25. The details of the third fluid path arrangement 41 and the functions and advantages are the same as already described in relation to Figure 1b and will not be described again. In summary also water can be added to the industrial process fluid in the system 8 via the fluid treatment system 200' and because the water is added via the sensor device 25 the sensor device can easily be calibrated by use of the water. The sensor device 25 can also be stored in water between uses.

Figure 3a shows schematically another embodiment of a fluid treatment system 300 according to the invention. Figure 3b shows the same embodiment as in Figure 3a but with the addition of a third fluid path arrangement 41 similar to previous embodiments. Many of the details are the same as already described for the embodiment shown in Figures 2a and 2b. Also in this embodiment the first fluid path arrangement 21 comprises a main fluid path 21a and a return loop fluid path 21b. The difference compared to the embodiment in Figures 2a and 2b is that in this embodiment no concentrate pump 24 is needed in the second fluid path arrangement 31. This is suitable because industrial process fluid concentrate is very viscous and difficult to pump. In this embodiment an ejector pump 29 is instead provided in the main fluid path 21a. The ejector pump 29 comprises a main inlet 29a, an outlet 29b and a suction inlet 29c. The main inlet 29a and the outlet 29c are connected in the main fluid path 21a such that the main inlet 29a is connected to the first fluid connection 3a and the outlet 29b is connected to the first pump 23. The suction inlet 29c of the ejector pump 29 is connected to an outlet 25b of the sensor device 25 which is provided in the return loop fluid path 21b. The ejector pump 29 is hereby driven by the first pump 23 and is connected with the suction inlet 29c of the ejector pump 29 to the outlet 25b of the sensor device 25, whereby industrial process fluid from a connected system 8 (or a connected industrial process fluid tank 11 of a system 8) and industrial process fluid concentrate from a connected industrial process fluid concentrate tank 22 can be sucked through the sensor device 25 by the ejector pump 29. Industrial process fluid from the system 8 will be sucked through the sensor device 25 by the ejector pump 29 when the return loop valve 27b is open and industrial process fluid concentrate from the industrial process fluid concentrate tank 22 will be sucked through the sensor device 25 by the ejector pump 29 when the concentrate valve 27a is open (while the return loop valve 27b at the same time is closed).

In the embodiment shown in Figure 3b, where also water can be added via the third fluid path arrangement 41, water can be added even if the first pump 23 is turned off thanks to the normally pressurized water supply. However, the first pump 23 may be pumping all the time or almost all the time for performing mixing.

Figure 4a shows schematically another embodiment of a fluid treatment system 400 according to the invention. Figure 4b shows the same embodiment as in Figure 4a but with the addition of a third fluid path arrangement 41 similar to previous embodiments. In this embodiment the first fluid path arrangement 21 of the fluid treatment system 400; 400' comprises a main fluid path 21a, a return loop fluid path 21b and also a separate sensor device fluid path 21c which comprises the sensor device 25. The main fluid path 21a comprises the first pump 23. The return loop fluid path 21b comprises a return loop valve 27b as in previous embodiments but also an ejector pump 29. The ejector pump 29 comprises as described above a main inlet 29a which is connected to an outlet side 23b of the first pump 23 and an outlet 29b which is connected to an inlet side 23a of the first pump 23. Hereby a fluid flow will be driven through the ejector pump 29 by a differential pressure provided over the first pump 23 when pumping. Furthermore, a suction inlet 29c of the ejector pump 29 is connected to an outlet 25b of the sensor device 25 which is provided in the separate sensor device fluid path 21c. In this embodiment an inlet 25a of the sensor device 25 should be connected to both the main fluid path 21a via a sensor device fluid path valve 27d and to the second fluid path arrangement 31 as in previous embodiments. In

Figure 4a two separate inlets to the sensor device 25 are shown but they can be combined into one as well. In the embodiment shown in Figure 4b the third fluid path arrangement 41 is also connected to an inlet 25a of the sensor device 25. Hereby, in the embodiments as shown in Figures 4a and 4b, industrial process fluid can be drawn through the sensor device 25 by the ejector 29 when the sensor device fluid path valve 27d is open and hereby a concentration of an industrial process fluid concentrate in the industrial process fluid can be measured in the sensor device 25. If the concentrate valve 27a instead is opened industrial process fluid concentrate can be sucked through the sensor device by the ejector pump 29. The return loop valve 27b needs to be open for both these actions. If only mixing of the industrial process fluid in the system 8 is wanted all the valves 27a,b,c,d can be closed and the first pump 23 can be pumping industrial process fluid through only the main fluid path 21a of the first fluid path arrangement 21.

When industrial process fluid concentrate is added in this embodiment of the invention a very good mixing of the concentrate into the industrial process fluid is provided because it is first mixed in the ejector pump 29 and then also in the first pump 23. Another advantage with this embodiment is that a possible leakage in for example the return loop valve 27b and/or the sensor device fluid path valve 27d is not very critical. This is because the ejector 29 will not work and suck a fluid from the sensor device 25 until a certain flow is provided through the ejector 29. If there is only a small leakage in the return loop valve 27b the suction inlet 29c of the ejector will not be sucking. This is suitable because for example when an industrial process fluid concentrate should be kept in the sensor device 25 for cleaning the sensor device a leakage would be negative. The ejector 29 will act as a barrier between the sensor device 25 and the rest of the fluid treatment system (i.e., the mixing performed in the main fluid path 21a and in the first pump 23). In these embodiments of the invention the sensitive parts of the system, such as the sensor device 25 and to some extent the valves 27a,b,c,d, will be kept outside the main flow of industrial process fluid which is provided in the main fluid path 21a. The sensitive parts will only be exposed to the industrial process fluid during short periods, i.e., only when needed. Hereby a lifetime of the sensitive components will be prolonged.

Figures 5a, 5b, 6, 7, 8a and 8b show schematically fluid treatment systems 500; 500'; 600; 700; 800; 800' according to different embodiments of the invention comprising a UV reactor 61. The UV reactor comprises a UV lamp and is connected in the first fluid path arrangement 21 of the fluid treatment system 500; 500' 600; 700; 800; 800' such that the first pump 23 can pump a flow of industrial process fluid through the UV reactor 61 for treatment. The industrial process fluid is irradiated by UV light when passing through the UV reactor 61 and hereby bacteria are destroyed which is suitable when treating industrial process fluids for further use. After passing the UV reactor the treated industrial process fluid is transferred to the second fluid connector 3b for delivering it back to the industrial process fluid in the system 8. The UV reactor 61 comprises hereby a reactor inlet 61a which is connected to an outlet 23b of the first pump 23 and a reactor outlet 61b which is connected to the second fluid connector 3b. In some embodiments the UV lamp is provided as an elongated lamp and an elongated annular reactor compartment is provided around the UV lamp where the industrial process fluid can flow. Hereby the industrial process fluid can come in relatively close contact with the UV lamp and an effective UV treatment is achieved. The reactor inlet 61a is provided in one end of the elongated reactor compartment and the reactor outlet 61b is provided in the opposite end of the elongated reactor compartment.

The fluid treatment system 500 as shown in Figure 5a comprises a first fluid path arrangement 21 which comprises the first pump 23 and a separate sensor device fluid path 21c but no return loop fluid path 21b as in many of the previous described embodiments.

The sensor device 25 is in this embodiment connected in a separate sensor device fluid path 21c together with a separate sensor device pump 26.

The sensor device pump 26 can pump a part of the fluid flow from the main fluid path 21a into the separate sensor device fluid path 21c. A second fluid path arrangement 31 is connected to an inlet of the sensor device 25a in the same way as described above in relation to for example Figure 1a. A separate concentrate pump 24 is needed in this embodiment of the invention.

The fluid treatment system 500' as shown in Figure 5b is identical to the fluid treatment system 500 in Figure 5a but with an added third fluid path arrangement 41 connected to an inlet 25a of the sensor device 25. The third fluid path arrangement 41 is similar as described for previous embodiments and will not be described again. In the embodiments as shown in Figures 5a and 5b the fluid treatment system 500, 500' can be used for UV treatment of the industrial process fluid as described above. The first pump 23 can be used for pumping industrial process fluid from a connected system 8 through the UV reactor 61 for UV irradiation of the industrial process fluid. The fluid treatment system 500; 500' can also be used for measuring a concentration of industrial process fluid concentrate in the sensor device 25. The sensor device pump 26 is in this embodiment used for pumping industrial process fluid into the sensor device 25. Even further an industrial process fluid concentrate from an industrial process fluid concentrate tank 22 can be added to the industrial process fluid in the system 8 via the fluid treatment system 500; 500'. The concentrate pump 24 is used to pump industrial process fluid concentrate into the sensor device 25. After having passed the sensor device 25 the industrial process fluid concentrate will be received in the main fluid path 21a and will be mixed with the industrial process fluid in the first pump 23. Furthermore, the sensor device 25 can be cleaned by the industrial process fluid concentrate as described above in relation to previous embodiments and water added via the third fluid path arrangement 41 can be used for calibration and storing as described in relation to previously described embodiments.

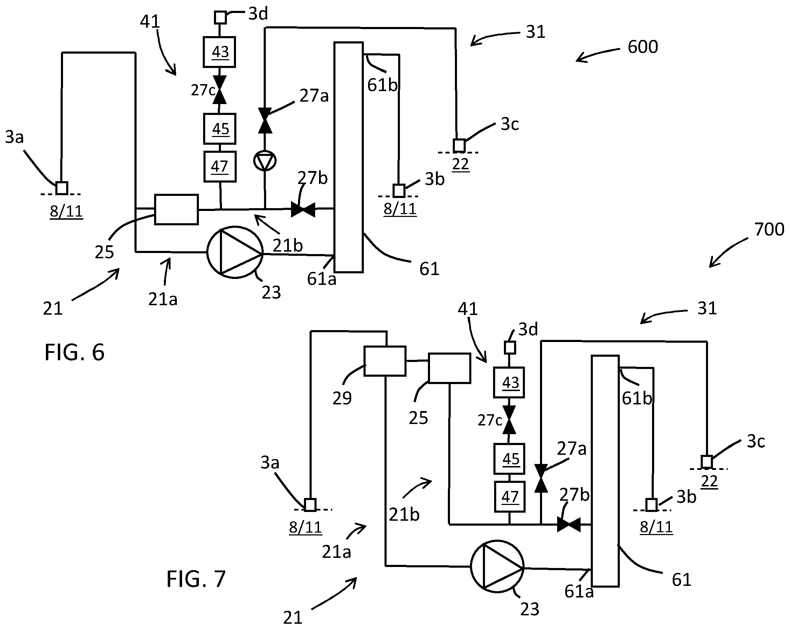

The embodiment shown in Figure 6 corresponds exactly to the embodiment shown in Figure 2b but with the addition of the UV reactor 61 and the embodiment shown in Figure 7 corresponds exactly to the embodiment shown in Figure 3b but with the addition of the UV reactor 61. These embodiments will not be further described. Both these two embodiments can obviously also be provided without the third fluid path arrangement 41 if no water needs to be added via the fluid treatment systems 600; 700.

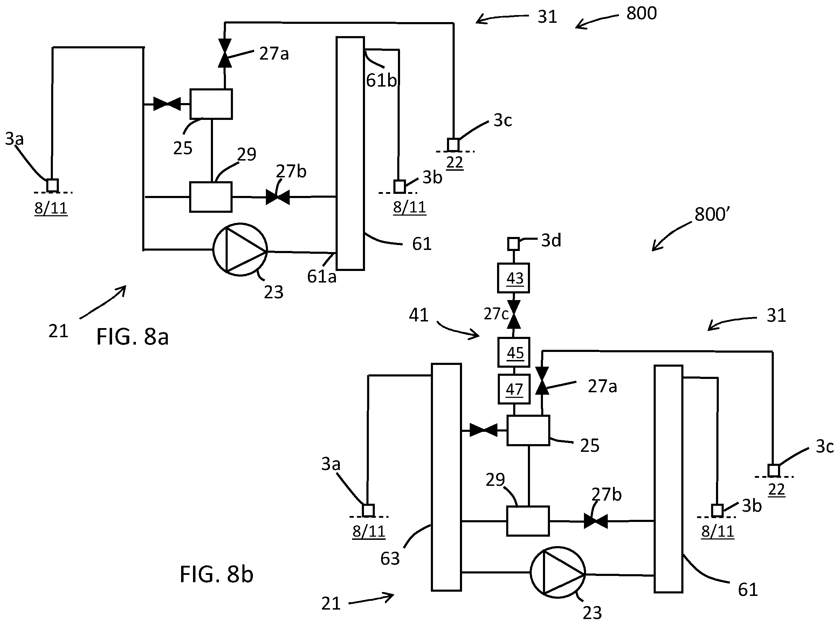

Figure 8a shows schematically another embodiment of a fluid treatment system 800 according to the invention including an UV reactor 61. Figure 8b shows the same embodiment as in Figure 8a but with the addition of a third fluid path arrangement 41 similar to previous embodiments and further with an added priming tank 63. A priming tank 63 may be suitable for avoiding problems with air into the pumps when starting the fluid treatment system 800'. A priming tank 63 can be provided in all the previous embodiments. The embodiments shown in Figures 8a and 8b correspond exactly to the embodiments shown in Figures 4a and 4b but with the addition of the UV reactor 61 and the priming tank 63 in Figure 8b. Hereby no further description is needed.

By combining the addition of industrial process fluid concentrate with UV treatment of industrial process fluid some important synergies are achieved. By mixing the industrial process fluid concentrate into the industrial process fluid via the first pump 23 the inmixing of the concentrate in the industrial process fluid will be effective. Furthermore, a UV treatment of the industrial process fluid will be more effective if there is a correct concentration of industrial process fluid concentrate in the industrial process fluid. Still further, in many of the embodiments the effect from the first pump 23 which is primarily used for the UV treatment is also used for pumping the industrial process fluid concentrate from the industrial process fluid concentrate tank 22 and for pumping a smaller part of the industrial process fluid flow through a sensor device for measuring the concentration. Hereby a very effective and robust system is achieved. The advantages related to cleaning and calibration of the sensor device have been discussed above. A fluid treatment system according to the invention provides for a very effective and convenient treatment of industrial process fluids.

## Claims

1. A method for treating an industrial process fluid used in a system (8), said method being **characterised in that** it comprises the steps of:
- transferring a part of the industrial process fluid used in the system (8) through a first fluid path arrangement (21) of a fluid treatment system (100; 100'; 200; 200'; 300; 300'; 400; 400'; 500; 500'; 600; 700; 800; 800') which is connected to an outlet (13a) and an inlet (13b) of the system (8);
- measuring a concentration of an industrial process fluid concentrate in the industrial process fluid by a sensor device (25) provided in the first fluid path arrangement (21) of the fluid treatment system (100; 100'; 200; 200'; 300; 300'; 400; 400'; 500; 500'; 600; 700; 800; 800');
- adding an amount of this industrial process fluid concentrate to the industrial process fluid used in the system (8) in order to maintain a predefined concentration level, wherein said amount is calculated based on the measured concentration, whereby the industrial process fluid concentrate is provided into the system (8) via the sensor device (25) in the fluid treatment system;
- cleaning the sensor device (25) at certain time intervals by providing the industrial process fluid concentrate into the sensor device and keeping the industrial process fluid concentrate in the sensor device for a certain time period.

2. Method according to claim 1, wherein the step of transferring a part of an industrial process fluid provided in the system (8) through a first fluid path arrangement (21) of a fluid treatment system comprises dividing a flow of the industrial process fluid when passing through the first fluid path arrangement (21) of the fluid treatment system (200; 200'; 300; 300'; 400; 400'; 500; 500'; 600; 700; 800; 800') into at least a main fluid path (21a) and a return loop fluid path (21b), wherein said main fluid path (21a) comprises a first pump (23) and said return loop fluid path (21b) either comprises the sensor device (25) or is connected to a separate sensor device fluid path (21c) of the first fluid path arrangement (21), wherein said sensor device fluid path (21c) comprises the sensor device (25), wherein said return loop fluid path (21b) is connected to the main fluid path (21a) such that a part of the fluid flow in the main fluid path (21a) can be returned over the first pump (23) via the return loop fluid path (21b) and wherein a fluid flow through said return loop fluid path (21b) is driven by a differential pressure over the first pump (23).

3. Method according to claim 2, wherein the step of measuring a concentration of an industrial process fluid concentrate in the industrial process fluid and the step of adding an amount of this industrial process fluid concentrate to the industrial process fluid used in the system (8) comprises sucking industrial process fluid and industrial process fluid concentrate respectively through the sensor device (25) by an ejector pump (29) which is driven by the first pump (23) in the main fluid path (21a) and connected to an outlet (25b) of the sensor device (25).

4. Method according to any one of the preceding claims, further comprising the step of adding water to the industrial process fluid in the system (8), whereby the adding of water is provided via the sensor device (25).

5. Method according to claim 4, further comprising the step of calibrating the sensor device (25) at certain time intervals by use of the water passing the sensor device (25) on its way into the system (8).

6. Method according to any one of the claims 4-5, further comprising registering an outage in water and/or industrial process fluid concentrate supply by comparing values measured by the sensor device (25).

7. A fluid treatment system for treating an industrial process fluid used in a system (8) to which the fluid treatment system can be connected, said fluid treatment system (100; 100'; 200; 200'; 300; 300'; 400; 400'; 500; 500'; 600; 700; 800; 800') being **characterised in that** it comprises:
- a first fluid connector (3a) configured to be connected to an outlet (13a) provided in the system (8), said first fluid connector (3a) being configured for receiving industrial process fluid into the fluid treatment system;
- a second fluid connector (3b) configured to be connected to an inlet (13b) provided in the system (8) for returning industrial process fluid after treatment in the fluid treatment system;
- a first fluid path arrangement (21) which is fluidly connecting the first fluid connector (3a) and the second fluid connector (3b), wherein said first fluid path arrangement (21) comprises:
o a first pump (23) configured to pump industrial process fluid from the first fluid connector (3a) to the second fluid connector (3b); and
o a sensor device (25) which is connected in the first fluid path arrangement (21) such that it receives at least a part of the industrial process fluid pumped by the first pump (23), wherein said sensor device (25) is configured for measuring a concentration of an industrial process fluid concentrate in the industrial process fluid; and
- a second fluid path arrangement (31) which is provided in connection with an inlet (25a) of the sensor device (25), wherein said second fluid path arrangement (31) comprises:
o a third fluid connector (3c) configured to be connected to an industrial process fluid concentrate tank (22),
whereby an industrial process fluid concentrate can be provided by the fluid treatment system from the connected industrial process fluid concentrate tank (22) via the second fluid path arrangement (31) and via the sensor device (25) in the first fluid path arrangement (21) and further via the first fluid path arrangement (21) to the second fluid connector (3b) for addition to the industrial process fluid used in the connected system (8),
wherein said fluid treatment system (100; 100'; 200; 200'; 300; 300'; 400; 400'; 500; 500'; 600; 700; 800; 800') further comprises a control system (60), whereby the control system (60) is configured to control the fluid treatment system to add an amount of industrial process fluid concentrate via the second fluid path arrangement (31) and via the sensor device (25) to the connected system (8) in order to maintain a predefined concentration level, wherein said amount is calculated based on the concentration measured in the sensor device (25),
wherein the control system (60) is configured to control the fluid treatment system (100; 100'; 200; 200'; 300; 300'; 400; 400'; 500; 500'; 600; 700; 800; 800') for cleaning the sensor device (25) at certain time intervals by letting industrial process fluid concentrate pass into the sensor device (25) and keeping the industrial process fluid concentrate in the sensor device (25) for a certain time period.

8. Fluid treatment system according to claim 7, wherein said sensor device (25) comprises a refractometer.

9. Fluid treatment system according to any one of the claims 7-8, wherein the first fluid path arrangement (21) comprises a main fluid path (21a) and a return loop fluid path (21b), wherein said main fluid path (21a) comprises the first pump (23) and said return loop fluid path (21b) either comprises the sensor device (25) or is connected to a separate sensor device fluid path (21c) of the first fluid path arrangement (21), wherein said sensor device fluid path (21c) comprises the sensor device (25), wherein said return loop fluid path (21b) is connected to the main fluid path (21a) such that a part of the fluid flow in the main fluid path (21a) can be returned over the first pump (23) via the return loop fluid path (21b) and wherein a fluid flow through said return loop fluid path (21b) is driven by a differential pressure over the first pump (23) and wherein the second fluid path arrangement (31) comprises a concentrate valve (27a) and the return loop fluid path (21b) comprises a return loop valve (27b).

10. Fluid treatment system according to any one of the claims 7-9, wherein the first fluid path arrangement (21) further comprises an ejector pump (29) which is driven by the first pump (23) and is connected with a suction inlet (29c) of the ejector pump (29) to an outlet (25b) of the sensor device (25), whereby industrial process fluid from the connected system (8) and industrial process fluid concentrate from a connected industrial process fluid concentrate tank (22) can be sucked through the sensor device (25) by the ejector pump (29).

11. Fluid treatment system according to claims 9 and 10, wherein a main inlet (29a) and an outlet (29b) of the ejector pump (29) are connected in the return loop fluid path (21b) and the suction inlet (29c) of the ejector pump (29) is connected to the outlet (25b) of the sensor device (25), wherein the sensor device (25) further is connected to the main flow path (21a) via a sensor device fluid path valve (27d) or wherein a main inlet (29a) and an outlet (29b) of the ejector pump (29) are connected in the main fluid path (21a) and the suction inlet (29c) of the ejector pump (29) is connected to the outlet (25b) of the sensor device (25) which is provided in the return loop fluid path (21b).

12. Fluid treatment system according to any one of the claims 7-11, further comprising a third fluid path arrangement (41) which is provided in connection with the inlet (25a) of the sensor device (25), wherein said third fluid path arrangement (41) comprises a fourth fluid connector (3d) configured to be connected to a water supply, whereby adding of water to the connected system (8) can be provided via the sensor device (25) in the fluid treatment system.

13. Fluid treatment system according to any one of the claims 7-12, further comprising a UV reactor (61) connected in the first fluid path arrangement (21), whereby the industrial process fluid is pumped through the UV reactor (61) by the first pump (23) and then returned to the connected system (8) via the first fluid path arrangement (21).

14. Fluid treatment system according to any one of the claims 7-13, wherein said industrial process fluid is a metal working fluid.

15. A system using industrial process fluid, wherein said system comprises a fluid treatment system (100; 100'; 200; 200'; 300; 300'; 400; 400'; 500; 500'; 600; 700; 800; 800') according to any one of the claims 7-14, wherein said fluid treatment system (100; 100'; 200; 200'; 300; 300'; 400; 400'; 500; 500'; 600; 700; 800; 800') is connected to an outlet (13a) and an inlet (13b) provided in the system (8).

## Patentansprüche

1. Verfahren zur Behandlung eines in einem System (8) verwendeten industriellen Prozessfluids, wobei das Verfahren **dadurch gekennzeichnet ist, dass** es die folgenden Schritte umfasst:
- Überführen eines Teils des im System (8) verwendeten industriellen Prozessfluids durch eine erste Fluidweganordnung (21) eines Fluidbehandlungssystems (100; 100'; 200; 200'; 300; 300'; 400; 400'; 500; 500'; 600; 700; 800; 800'), das mit einem Auslass (13a) und einem Einlass (13b) des Systems (8) verbunden ist;
- Messen der Konzentration eines industriellen Prozessfluidskonzentrats im industriellen Prozessfluid mittels einer Sensorvorrichtung (25), die in der ersten Fluidweganordnung (21) des Fluidbehandlungssystems (100; 100'; 200; 200'; 300; 300'; 400; 400'; 500; 500'; 600; 700; 800; 800') bereitgestellt ist;
- Zugeben einer Menge dieses industriellen Prozessfluidskonzentrats zu der im System (8) verwendeten industriellen Prozessfluid, um einen vordefinierten Konzentrationsgrad aufrechtzuerhalten, wobei diese Menge auf der Grundlage der gemessenen Konzentration berechnet wird, wobei das industrielle Prozessfluidskonzentrat über die Sensorvorrichtung (25) im Fluidbehandlungssystem in das System (8) bereitgestellt wird;
- Reinigen der Sensorvorrichtung (25) in bestimmten Zeitabständen durch Bereitstellen des industriellen Prozessfluidskonzentrats in die Sensorvorrichtung und Belassen des industriellen Prozessfluidskonzentrats in der Sensorvorrichtung für einen bestimmten Zeitraum.

2. Verfahren nach Anspruch 1, wobei der Schritt des Überführens eines Teils eines im System (8) bereitgestellten industriellen Prozessfluids durch eine erste Fluidweganordnung (21) eines Fluidbehandlungssystems das Aufteilen eines Stroms des industriellen Prozessfluids beim Durchströmen der ersten Fluidweganordnung (21) des Fluidbehandlungssystems (200; 200'; 300; 300'; 400; 400'; 500; 500'; 600; 700; 800; 800') in mindestens einen Hauptfluidweg (21a) und einen Rücklauffluidweg (21b) umfasst, wobei der Hauptfluidweg (21a) eine erste Pumpe (23) umfasst und der Rücklauffluidweg (21b) entweder die Sensorvorrichtung (25) umfasst oder mit einem separaten Sensorvorrichtungsfluidweg (21c) der ersten Fluidweganordnung (21) verbunden ist, wobei der Sensorvorrichtungsfluidweg (21c) die Sensorvorrichtung (25) umfasst, wobei der Rücklauffluidweg (21b) ist mit dem Hauptfluidweg (21a) so verbunden, dass ein Teil des Fluidstroms im Hauptfluidweg (21a) über den Rücklaufkreislauf (21b) über die erste Pumpe (23) zurückgeführt werden kann, wobei ein Fluidstrom durch den Rücklaufkreislauf (21b) durch einen Differenzdruck über der ersten Pumpe (23) erzeugt wird.

3. Verfahren nach Anspruch 2, wobei der Schritt des Messens einer Konzentration eines industriellen Prozessfluidskonzentrats in der industriellen Prozessfluid und der Schritt des Zugebens einer Menge dieses industriellen Prozessfluidskonzentrats zu dem in dem System (8) verwendeten industriellen Prozessfluid Ansaugen des industriellen Prozessfluids bzw. des industriellen Prozessfluidskonzentrats durch die Sensorvorrichtung (25) mittels einer Ejektorpumpe (29) umfasst, die von der ersten Pumpe (23) im Hauptfluidweg (21a) angetrieben wird und mit einem Auslass (25b) der Sensorvorrichtung (25) verbunden ist.

4. Verfahren nach einem der vorstehenden Ansprüche, weiter umfassend den Schritt des Zugebens von Wasser zu dem industriellen Prozessfluid im System (8), wobei das Zugeben von Wasser über die Sensorvorrichtung (25) bereitgestellt wird.

5. Verfahren nach Anspruch 4, weiter umfassend den Schritt der Kalibrierung der Sensorvorrichtung (25) in bestimmten Zeitabständen unter Verwendung des Wassers, das die Sensorvorrichtung (25) auf seinem Weg in das System (8) passiert.

6. Verfahren nach einem der Ansprüche 4-5, weiter umfassend Registrieren einer Unterbrechung in der Versorgung mit Wasser und/oder industriellem Prozessfluidskonzentrat durch Vergleichen der von der Sensorvorrichtung (25) gemessenen Werte.

7. Fluidbehandlungssystem zur Behandlung eines industriellen Prozessfluids, das in einem System (8) verwendet wird, an das das Fluidbehandlungssystem angeschlossen werden kann, wobei das Fluidbehandlungssystem (100; 100'; 200; 200'; 300; 300'; 400; 400'; 500; 500'; 600; 700; 800; 800') **dadurch gekennzeichnet ist, dass** es Folgendes umfasst:
- einen ersten Fluidverbinder (3a), der so konfiguriert ist, dass er mit einem im System (8) bereitgestellten Auslass (13a) verbunden werden kann, wobei dieser erste Fluidverbinder (3a) so konfiguriert ist, dass er industrielles Prozessfluid in das Fluidbehandlungssystem aufnimmt;
- einen zweiten Fluidanschluss (3b), der so konfiguriert ist, dass er mit einem im System (8) bereitgestellten Einlass (13b) verbunden werden kann, um industrielles Prozessfluid nach der Behandlung im Fluidbehandlungssystem zurückzuführen;
- eine erste Fluidweganordnung (21), die den ersten Fluidverbinder (3a) und den zweiten Fluidverbinder (3b) fluidisch verbindet, wobei die erste Fluidweganordnung (21) Folgendes umfasst:
- eine erste Pumpe (23), die so konfiguriert ist, dass sie industrielles Prozessfluid vom ersten Fluidanschluss (3a) zum zweiten Fluidanschluss (3b) pumpt; und
- eine Sensorvorrichtung (25), die in die erste Fluidweganordnung (21) so angeschlossen ist, dass sie mindestens einen Teil des von der ersten Pumpe (23) geförderten industriellen Prozessfluids aufnimmt, wobei die Sensorvorrichtung (25) zur Messung der Konzentration eines industriellen Prozessfluidkonzentrats im industriellen Prozessfluid konfiguriert ist; und
- eine zweite Fluidweganordnung (31), die in Verbindung mit einem Einlass (25a) der Sensorvorrichtung (25) bereitgestellt ist, wobei die zweite Fluidweganordnung (31) Folgendes umfasst:
- einen dritten Fluidanschluss (3c), der für den Anschluss an einen industriellen Prozessfluidkonzentrattank (22) konfiguriert ist,
wobei ein industrielles Prozessfluidskonzentrat vom Fluidbehandlungssystem aus dem angeschlossenen industriellen Prozessfluidkonzentrattank (22) über die zweite Fluidweganordnung (31) und über die Sensorvorrichtung (25) in der ersten Fluidweganordnung (21) und weiter über die erste Fluidweganordnung (21) zum zweiten Fluidanschluss (3b) zur Zugabe zum im angeschlossenen System (8) verwendeten industriellen Prozessfluid bereitgestellt werden kann,
wobei das Fluidbehandlungssystem (100; 100'; 200; 200'; 300; 300'; 400; 400'; 500; 500'; 600; 700; 800; 800') weiter ein Steuerungssystem (60) umfasst, welches so konfiguriert ist, dass es das Fluidbehandlungssystem steuert, um über die zweite Fluidweganordnung (31) und über die Sensorvorrichtung (25) eine Menge an industriellem Prozessfluidkonzentrat in das angeschlossene System (8) zuzugeben, um einen vordefinierten Konzentrationsgrad aufrechtzuerhalten, wobei diese Menge auf der Grundlage der in der Sensorvorrichtung (25) gemessenen Konzentration berechnet wird,
wobei das Steuerungssystem (60) so konfiguriert ist, dass es das Fluidbehandlungssystem (100; 100'; 200; 200'; 300; 300'; 400; 400'; 500; 500'; 600; 700; 800; 800') zur Reinigung der Sensorvorrichtung (25) in bestimmten Zeitabständen steuert, indem es industrielles Prozessfluidkonzentrat in die Sensorvorrichtung (25) einleitet und dieses Konzentrat für einen bestimmten Zeitraum in der Sensorvorrichtung (25) belässt.

8. Fluidbehandlungssystem nach Anspruch 7, wobei die Sensorvorrichtung (25) ein Refraktometer umfasst.

9. Fluidbehandlungssystem nach einem der Ansprüche 7-8, wobei die erste Fluidweganordnung (21) einen Hauptfluidweg (21a) und einen Rücklauffluidweg (21b) umfasst, wobei der Hauptfluidweg (21a) die erste Pumpe (23) umfasst und der Rücklauffluidweg (21b) entweder die Sensorvorrichtung (25) umfasst oder mit einem separaten Sensorvorrichtungsfluidweg (21c) der ersten Fluidweganordnung (21) verbunden ist, wobei der Sensorvorrichtungsfluidweg (21c) die Sensorvorrichtung (25) umfasst, wobei der Rücklauffluidweg (21b) mit dem Hauptfluidweg (21a) so verbunden ist, dass ein Teil des Fluidstroms im Hauptfluidweg (21a) über den Rücklauffluidweg (21b) zur ersten Pumpe (23) zurückgeführt werden kann und wobei ein Fluidstrom durch den Rücklauffluidweg (21b) durch einen Differenzdruck über der ersten Pumpe (23) angetrieben wird, und wobei die zweite Fluidweganordnung (31) ein Konzentratventil (27a) umfasst und der Rücklauffluidweg (21b) ein Rücklaufventil (27b) umfasst.

10. Fluidbehandlungssystem nach einem der Ansprüche 7-9, wobei die erste Fluidweganordnung (21) weiter eine Ejektorpumpe (29) umfasst, die von der ersten Pumpe (23) angetrieben wird und mit einem Sauganschluss (29c) der Ejektorpumpe (29) mit einem Auslass (25b) der Sensorvorrichtung (25) verbunden ist, wodurch industrielles Prozessfluid aus dem angeschlossenen System (8) und industrielles Prozessfluidskonzentrat aus einem angeschlossenen industriellen Prozessfluidskonzentrattank (22) durch die Sensorvorrichtung (25) mittels der Ejektorpumpe (29) angesaugt werden können.

11. Fluidbehandlungssystem nach Anspruch 9 und 10, wobei ein Haupteinlass (29a) und ein Auslass (29b) der Ejektorpumpe (29) im Rücklaufkreislauf (21b) verbunden sind und der Saugeinlass (29c) der Ejektorpumpe (29) mit dem Auslass (25b) der Sensorvorrichtung (25) verbunden ist, wobei die Sensorvorrichtung (25) weiter über ein Sensorvorrichtungs-Fluidwegventil (27d) mit dem Hauptströmungsweg (21a) verbunden ist, oder wobei ein Haupteinlass (29a) und ein Auslass (29b) der Ejektorpumpe (29) im Hauptströmungsweg (21a) verbunden sind und der Saugeinlass (29c) der Ejektorpumpe (29) mit dem Auslass (25b) der Sensorvorrichtung (25) verbunden ist, die im Rücklaufkreislauf (21b) bereitgestellt ist.

12. Fluidbehandlungssystem nach einem der Ansprüche 7-11, weiter umfassend eine dritte Fluidweganordnung (41), die mit dem Einlass (25a) der Sensorvorrichtung (25) verbunden ist, wobei die dritte Fluidweganordnung (41) einen vierten Fluidanschluss (3d) umfasst, der zum Anschluss an eine Wasserversorgung konfiguriert ist, wodurch das Zugeben von Wasser zum angeschlossenen System (8) über die Sensorvorrichtung (25) im Fluidbehandlungssystem bereitgestellt werden kann.

13. Fluidbehandlungssystem nach einem der Ansprüche 7-12, weiter umfassend einen UV-Reaktor (61), der in die erste Fluidweganordnung (21) angeschlossen ist, wobei das industrielle Prozessfluid mit der ersten Pumpe (23) durch den UV-Reaktor (61) gepumpt und dann über die erste Fluidweganordnung (21) in das angeschlossene System (8) zurückgeführt wird.

14. Fluidbehandlungssystem nach einem der Ansprüche 7-13, wobei es sich bei dem industriellen Prozessfluid um ein Metallbearbeitungsfluid handelt.

15. System, das industrielle Prozessfluid verwendet, wobei das System ein Fluidbehandlungssystem (100; 100'; 200; 200'; 300; 300'; 400; 400'; 500; 500'; 600; 700; 800; 800') nach einem der Ansprüche 7-14 umfasst, wobei das Fluidbehandlungssystem (100; 100'; 200; 200'; 300; 300'; 400; 400'; 500; 500'; 600; 700; 800; 800') mit einem Auslass (13a) und einem Einlass (13b) des Systems (8) verbunden ist.

## Revendications

1. Procédé de traitement d'un fluide de processus industriel utilisé dans un système (8), ledit procédé étant **caractérisé en ce qu'**il comprend les étapes de :
- transfert d'une partie du fluide de processus industriel utilisé dans le système (8) à travers un agencement de premier chemin de fluide (21) d'un système de traitement de fluide (100 ; 100' ; 200 ; 200' ; 300 ; 300' ; 400 ; 400' ; 500 ; 500' ; 600 ; 700 ; 800 ; 800') ; qui est connecte à une sortie (13a) et à une entrée (13b) du système (8) ;
- mesure de la concentration d'un concentré de fluide de processus industriel dans le fluide de processus industriel par un dispositif de capteur (25) prévu dans le premier agencement de chemin de fluide (21) du système de traitement de fluide (100 ; 100' ; 200 ; 200' 400 ; 400' ; 500 ; 500' ; 600; 700 ; 800; 800') ;
- ajout d'une quantité de ce concentré de fluide de processus industriel au fluide de processus industriel utilisé dans le système (8) afin de maintenir un niveau de concentration prédéfini, dans lequel ladite quantité est calculée sur la base de la concentration mesurée, le concentré de fluide de processus industriel étant ainsi fourni dans le système (8) via le dispositif de capteur (25) du système de traitement des fluides ;
- nettoyage du dispositif de capteur (25) à certains intervalles de temps en fournissant le concentré de fluide de processus industriel dans le dispositif de capteur et en maintenant le concentré de fluide de processus industriel dans le dispositif de capteur pendant une certaine période de temps.

2. Procédé selon la revendication 1, dans lequel l'étape de transfert d'une partie d'un fluide de processus industriel, introduit dans le système (8), à travers un premier agencement de chemin de fluide (21) d'un système de traitement de fluides, comprend la division du flux du fluide de processus industriel lors de son passage à travers le premier agencement de chemin de fluide (21) du système de traitement de fluides (200 ; 200' ; 300 ; 300' ; 400 ; 400' ; 500 ; 500' ; 600 ; 700 ; 800 ; 800') en au moins un chemin de fluide principal (21a) et un chemin de fluide de retour (21b), dans lequel ledit chemin de fluide principal (21a) comprend une première pompe (23), et le chemin de fluide de retour (21b) comprend soit le dispositif de capteur (25), soit est connecté à un chemin de fluide par le dispositif de capteur (21c) du premier agencement de chemin de fluide (21), dans lequel ledit chemin de fluide du dispositif capteur (21c) comprend le dispositif capteur (25), dans lequel ledit chemin de fluide de boucle de retour (21b) est connecté au chemin de fluide principal (21a), de sorte qu'une partie du flux du fluide dans le chemin (21a) de fluide principal puisse être renvoyée sur la première pompe (23) via le chemin de fluide de boucle de retour (21b) et dans lequel un flux de fluide à travers ledit chemin de fluide de boucle de retour (21b) est entraîné par une pression différentielle sur la première pompe (23).

3. Procédé selon la revendication 2, dans lequel l'étape de mesure d'une concentration d'un concentré de fluide de processus industriel dans le fluide de processus industriel et l'étape d'ajout d'une quantité de ce concentré de fluide de processus industriel au fluide de processus industriel utilisé dans le système (8) comprennent l'aspiration du fluide de processus industriel et du concentré de fluide de processus industriel respectivement à travers le dispositif de capteur (25) par une pompe à éjecteur (29) qui est entraînée par la première pompe (23) dans le chemin de fluide principal (21a) et reliée à une sortie (25b) du dispositif de capteur (25).

4. Procédé selon l'une quelconque des revendications précédentes, comprenant en outre l'étape d'ajout d'eau au fluide de processus industriel dans le système (8), l'ajout d'eau étant ainsi assuré par le dispositif de capteur (25).

5. Procédé selon la revendication 4, comprenant en outre l'étape d'étalonnage du dispositif de capteur (25) à certains intervalles de temps en utilisant l'eau passant par le dispositif de capteur (25) lors de son entrée dans le système (8).

6. Procédé selon l'une quelconque des revendications 4-5, comprenant en outre l'enregistrement d'une coupure d'eau et/ou d'une alimentation en concentré de fluide de processus industriel en comparant les valeurs mesurées par le dispositif de capteur (25).

7. Système de traitement de fluide destiné au traitement d'un fluide de processus industriel utilisé dans un système (8) auquel ce système de traitement de fluide peut être raccordé, ledit système de traitement de fluide (100 ; 100' ; 200 ; 200' ; 300 ; 300' ; 400 ; 400' ; 500 ; 500' ; 600 ; 700; 800 ; 800') étant **caractérisé en ce qu'**il comprend :
- un premier connecteur de fluide (3a) configuré pour être connecté à une sortie (13a) prévue dans le système (8), ledit premier connecteur de fluide (3a) étant configuré pour recevoir un fluide de processus industriel dans le système de traitement des fluides ;
- un deuxième connecteur de fluide (3b) configuré pour être connecté à une entrée (13b) prévue dans le système (8) pour renvoyer le fluide de processus industriel après traitement dans le système de traitement des fluides ;
- un premier agencement de chemin de fluide (21) qui relie de manière fluide le premier connecteur de fluide (3a) et le deuxième connecteur de fluide (3b), dans lequel ledit premier agencement de chemin de fluide (21) comprend :
- une première pompe (23) configurée pour pomper le fluide de processus industriel du premier connecteur de fluide (3a) au deuxième connecteur de fluide (3b) ; et
- un dispositif de capteur (25) connecté au premier agencement de chemin de fluide (21) de manière à recevoir au moins une partie du fluide de processus industriel pompé par la première pompe (23), dans lequel ledit dispositif de capteur (25) est configuré pour mesurer la concentration d'un concentré de fluide de processus industriel dans le fluide de processus industriel ; et
- un deuxième agencement de chemin de fluide (31) qui est prévu en connexion avec une entrée (25a) du dispositif de capteur (25), dans lequel ledit deuxième agencement de chemin de fluide (31) comprenant :
- un troisième connecteur de fluide (3c) configuré pour être connecté à un réservoir de concentré de fluide de processus industriel (22),
par lequel un concentré de fluide de processus industriel peut être fourni par le système de traitement des fluides à partir du réservoir de concentré de fluide de processus industriel connecté (22) via le deuxième agencement de chemin de fluide (31) et via le dispositif de capteur (25) dans le premier agencement de chemin de fluide (21) et ensuite via le premier agencement de chemin de fluide (21) au deuxième connecteur de fluide (3b) pour être ajouté au fluide de processus industriel utilisé dans le système connecté (8),
dans lequel ledit système de traitement des fluides (100 ; 100' ; 200 ; 200' ; 300 ; 300' ; 400 ; 400' ; 500 ; 500' ; 600 ; 700 ; 800 ; 800') comprend en outre un système de commande (60), par lequel le système de commande (60) est configuré pour commander le système de traitement des fluides afin d'ajouter une quantité de concentré de fluide de processus industriel via le deuxième agencement de chemin de fluide (31) et via le dispositif de capteur (25) au système connecté (8) afin de maintenir un niveau de concentration prédéfini, dans lequel ladite quantité est calculée sur la base de la concentration mesurée par le dispositif de capteur (25).
dans lequel le système de commande (60) est configuré pour commander le système de traitement de fluides (100 ; 100' ; 200 ; 200' ; 300 ; 300' ; 400 ; 400' ; 500 ; 500' ; 600 ; 700 ; 800 ; 800') pour nettoyer le dispositif de capteur (25) à certains intervalles de temps en laissant passer le concentré de fluide de processus industriel dans le dispositif de capteur (25) et en maintenant le concentré de fluide de processus industriel dans le dispositif de capteur (25) pendant une certaine période de temps.

8. Système de traitement de fluides selon la revendication 7, dans lequel ledit dispositif de capteur (25) comprend un réfractomètre.

9. Système de traitement de fluides selon l'une quelconque des revendications 7-8, dans lequel le premier agencement de chemin de fluide (21) comprend un chemin de fluide principal (21a) et un chemin de fluide de retour (21b), dans lequel ledit chemin de fluide principal (21a) comprend la première pompe (23), et le chemin de fluide de retour (21b) comprend soit le dispositif de capteur (25), soit est connecté à un chemin de fluide séparé du dispositif de capteur (21c) du premier agencement de chemin de fluide (21), dans lequel ledit chemin de fluide du dispositif de capteur (21c) comprend le dispositif capteur (25), dans lequel le chemin de fluide de retour (21b) est connecté au chemin de fluide principal (21a) de sorte qu'une partie du flux du fluide dans le chemin de fluide principal puisse être renvoyée vers la première pompe (23) via le chemin de fluide de retour (21b), et dans lequel un flux de fluide à travers ledit chemin fluide de retour (21b) est entraîné par une différence de pression au niveau de la première pompe (23), et dans lequel le deuxième agencement de chemin de fluide (31) comprend une vanne de concentration (27a) et le chemin de fluide de retour (21b) comprend une vanne de boucle de retour (27b).

10. Système de traitement de fluides selon l'une quelconque des revendications 7-9, dans lequel le premier agencement de chemin de fluide (21) comprend en outre une pompe à éjecteur (29) entraînée par la première pompe (23) et reliée par une entrée d'aspiration (29c) de la pompe à éjecteur (29) à une sortie (25b) du dispositif de capteur (25), de sorte que le fluide de procédé industriel provenant du système connecté (8) et le concentré de fluide de procédé industriel provenant d'un réservoir de concentré de fluide de procédé industriel connecté (22) peuvent être aspirés à travers le dispositif de capteur (25) par la pompe à éjecteur (29).

11. Système de traitement de fluide selon les revendications 9 et 10, dans lequel une entrée principale (29a) et une sortie (29b) de la pompe d'éjection (29) sont connectées dans le circuit de fluide de retour (21b) et l'entrée d'aspiration (29c) de la pompe d'éjection (29) est connectée à la sortie (25b) du dispositif de capteur (25), dans lequel le dispositif de capteur (25) est en outre connecté au chemin d'écoulement principal (21a) via une vanne de chemin de fluide du dispositif de capteur (27d), ou dans lequel une entrée principale (29a) et une sortie (29b) de la pompe d'éjection (29) sont connectées dans le chemin de fluide principal (21a) et l'entrée d'aspiration (29c) de la pompe d'éjection (29) est connectée à la sortie (25b) du dispositif de capteur (25) qui est prévue dans le chemin de fluide de retour (21b).

12. Système de traitement des fluides selon l'une quelconque des revendications 7-11, comprenant en outre un troisième agencement de voie de fluide (41) qui est fourni en relation avec l'entrée (25a) du dispositif de capteur (25), dans lequel ledit troisième agencement de chemin de fluide (41) comprend un quatrième connecteur de fluide (3d) configuré pour être connecté à une alimentation en eau, permettant ainsi l'ajout d'eau au système connecté (8) via le dispositif de capteur (25) dans le système de traitement des fluides.

13. Système de traitement des fluides selon l'une quelconque des revendications 7-12, comprenant en outre un réacteur UV (61) connecté dans le premier agencement de chemin de fluide (21), par lequel le fluide de processus industriel est pompé à travers le réacteur UV (61) par la première pompe (23) puis renvoyé au système connecté (8) via le premier agencement de chemin de fluide (21).

14. Système de traitement de fluides selon l'une quelconque des revendications 7-13, dans lequel ledit fluide de processus industriel est un fluide de travail des métaux.

15. Système utilisant le fluide de processus industriel, dans lequel ledit système comprend un système de traitement de fluides (100 ; 100' ; 200 ; 200' ; 300; 300' ; 400 ; 400' ; 500; 500' ; 600 ; 700 ; 800 ; 800') selon l'une quelconque des revendications 7-14, dans lequel ledit système de traitement de fluide (100 ; 100' ; 200 ; 200' ; 300 ; 300' 600 ; 700 ; 800 ; 800') est connecté à une sortie (13a) et à une entrée (13b) prévues dans le système (8).
